(19) Europäisches Patentamt / European Patent Office / Office européen des brevets

(11) **EP 3 906 328 B1**

(12) **EUROPÄISCHE PATENTSCHRIFT**

(45) Veröffentlichungstag und Bekanntmachung des Hinweises auf die Patenterteilung:
**06.03.2024   Patentblatt 2024/10**

(21) Anmeldenummer: **19829646.9**

(22) Anmeldetag: **27.12.2019**

(51) Internationale Patentklassifikation (IPC):
**C23C 2/12** *(2006.01)*    **C23C 2/40** *(2006.01)*
**C23C 2/26** *(2006.01)*    **C23C 2/28** *(2006.01)*
**C21D 1/00** *(2006.01)*    **C21D 1/26** *(2006.01)*
**C25D 11/04** *(2006.01)*    **C25D 11/08** *(2006.01)*
**C25D 11/10** *(2006.01)*

(52) Gemeinsame Patentklassifikation (CPC):
**C23C 2/12; C21D 1/00; C21D 1/26; C23C 2/26; C23C 2/28; C23C 2/29; C23C 2/40; C25D 11/04;** C25D 11/08; C25D 11/10

(86) Internationale Anmeldenummer:
**PCT/EP2019/087067**

(87) Internationale Veröffentlichungsnummer:
**WO 2020/141147 (09.07.2020 Gazette 2020/28)**

(54) **ALUMINIUMBASIERTE BESCHICHTUNG FÜR STAHLFLACHPRODUKTE ZUR PRESSFORMHÄRTUNG VON BAUTEILEN UND VERFAHREN ZUR HERSTELLUNG HIERZU**

ALUMINUM-BASED COATING FOR FLAT STEEL PRODUCTS FOR PRESS MOLD HARDENING COMPONENTS, AND METHOD FOR PRODUCING SAME

REVÊTEMENT À BASE D'ALUMINIUM POUR DES PRODUITS PLATS EN ACIER POUR LE DURCISSEMENT DANS LE MOULE DE PIÈCES ET PROCÉDÉ POUR LES FABRIQUER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.01.2019   DE 102019100140**

(43) Veröffentlichungstag der Anmeldung:
**10.11.2021   Patentblatt 2021/45**

(73) Patentinhaber: **Salzgitter Flachstahl GmbH**
**38239 Salzgitter (DE)**

(72) Erfinder:
• **DEBEAUX, Marc**
  **47259 Duisburg (DE)**
• **LUTHER, Friedrich**
  **47259 Duisburg (DE)**
• **KOLL, Thomas**
  **47259 Duisburg (DE)**

(74) Vertreter: **Moser Götze & Partner Patentanwälte mbB**
**Paul-Klinger-Strasse 9**
**45127 Essen (DE)**

(56) Entgegenhaltungen:
**WO-A1-2018/153755**

**Beschreibung**

Die Erfindung betrifft ein Stahlflachprodukt mit aluminiumbasierter Beschichtung zur Pressformhärtung von Bauteilen, wobei die Beschichtung einen im Schmelztauchverfahren aufgebrachten, aluminiumbasierten Überzug umfasst. Auch betrifft die Erfindung ein Verfahren zur Herstellung eines Stahlflachproduktes mit einer aluminiumbasierten Beschichtung, wobei als Beschichtung ein aluminiumbasierter Überzug im Schmelztauchverfahren auf das Stahlblech oder Stahlband aufgebracht wird. Des Weiteren betrifft die Erfindung ein Verfahren zur Herstellung von pressgehärteten Bauteilen aus Stahlflachprodukten mit einer aluminiumbasierten Beschichtung, die nach dem vorgenannten Verfahren hergestellt sind. Zusätzlich betrifft die Erfindung ein pressgehärtetes Bauteil aus Stahlflachprodukten mit einer aluminiumbasierten Beschichtung, das nach dem vorgenannten Verfahren hergestellt ist. Unter Stahlflachprodukten werden nachfolgend insbesondere Stahlbleche oder Stahlbänder verstanden. Stahlbleche für die Pressformhärtung werden oftmals auch als Platinen bezeichnet.

Es ist bekannt, dass warmumgeformte Stahlbleche insbesondere im Automobilbau immer häufiger Verwendung finden. Durch den auch als Presshärten oder Pressformhärten bezeichneten Prozess können hochfeste Bauteile erzeugt werden, die vorwiegend im Bereich der Karosserie eingesetzt werden. Das Presshärten kann grundsätzlich mittels zwei verschiedener Verfahrensvarianten durchgeführt werden, nämlich mittels des direkten oder indirekten Verfahrens. Während beim indirekten Verfahren die Prozessschritte des Umformens und Härtens getrennt voneinander ablaufen, finden sie beim direkten Verfahren in einem Werkzeug gemeinsam statt. Im Folgenden wird aber nur das direkte Verfahren betrachtet.

Beim direkten Verfahren wird eine Stahlblechplatine über die sogenannte Austenitisierungstemperatur (Ac3) aufgeheizt, anschließend wird die so erhitzte Platine in ein Formwerkzeug überführt und in einem einstufigen Umformschritt zum fertigen Bauteil umgeformt und hierbei durch das gekühlte Formwerkzeug gleichzeitig mit einer Geschwindigkeit, die über der kritischen Abkühlgeschwindigkeit des Stahls liegt, abgekühlt, so dass ein gehärtetes Bauteil erzeugt wird.

Bekannte warmumformbare Stähle für diesen Einsatzbereich sind zum Beispiel der Mangan-Bor-Stahl "22MnB5" und neuerdings auch luftvergütbare Stähle gemäß des europäischen Patentes EP 2 449 138 B1 oder ein zunderarmer Vergütungsstahl gemäß des europäischen Patentes EP 2 828 414 B1.

Neben unbeschichteten Stahlblechen werden auch Stahlbleche mit einem Verzunderungsschutz für das Presshärten von der Automobilindustrie eingesetzt. Die Vorteile liegen hier neben der erhöhten Korrosionsbeständigkeit des fertigen Bauteils darin, dass die Platinen oder Bauteile im Ofen nicht verzundern, wodurch der Verschleiß der Pressenwerkzeuge durch abgeplatzten Zunder reduziert wird und die Bauteile vor der Weiterverarbeitung oft nicht aufwendig gestrahlt werden müssen.

Für das Presshärten sind derzeit die folgenden, durch Schmelztauchen aufgebrachten (Legierungs-)Überzüge bekannt: Aluminium-Silizium (AS), Zink-Aluminium (Z), Zink-Aluminium-Eisen (ZF/Galvannealed), Zink-Magnesium-Aluminium (ZM), sowie elektrolytisch abgeschiedene Beschichtungen aus Zink-Nickel oder Zink, wobei letztere vor der Warmumformung in eine Eisen-Zink-Legierungsschicht umgewandelt wird. Diese Korrosionsschutzbeschichtungen werden üblicherweise in kontinuierlichen Durchlaufverfahren auf das Warm- oder Kaltband aufgebracht.

Die Herstellung von Bauteilen mittels Abschrecken von Vorprodukten aus presshärtbaren Stählen durch Warmumformen in einem Umformwerkzeug ist aus dem deutschen Patent DE 601 19 826 T2 bekannt. Hier wird eine zuvor oberhalb der Austenitisierungstemperatur auf 800 - 1200 °C erwärmte und ggf. mit einem metallischen Überzug aus Zink oder auf Basis von Zink versehene Blechplatine in einem fallweise gekühlten Werkzeug durch Warmumformung zu einem Bauteil umgeformt, wobei während des Umformens durch schnellen Wärmeentzug das Blech beziehungsweise Bauteil im Umformwerkzeug eine Abschreckhärtung (Presshärtung) erfährt und durch das entstehende martensitische Härtegefüge die geforderten Festigkeitseigenschaften erreicht.

Die Herstellung von Bauteilen mittels Abschrecken von mit einer Aluminiumlegierung beschichteten Vorprodukten aus presshärtbaren Stählen durch Warmumformen in einem Umformwerkzeug ist auch aus dem deutschen Patent DE 699 33 751 T2 bekannt. Hier wird ein mit einer Aluminiumlegierung beschichtetes Blech vor einem Umformen auf über 700 °C erwärmt, wobei eine intermetallisch legierte Verbindung auf Basis von Eisen, Aluminium und Silizium auf der Oberfläche entsteht und nachfolgend das Blech umgeformt und mit einer Geschwindigkeit oberhalb der kritischen Abkühlgeschwindigkeit abgekühlt wird.

Auch ist in der internationalen Offenlegungsschrift WO 2018/153 755 A1 bereits beschrieben, aus Stahlblechen mit einem aluminiumbasierten Überzug pressgehärtete Bauteile herzustellen. Hierzu wird das Stahlblech auf Austenitisierungstemperatur (Ac3) aufgeheizt, anschließend wird das so erhitzte Stahlblech in ein Formwerkzeug überführt und in einem einstufigen Umformschritt zum fertigen Bauteil umgeformt. Hierbei wird durch das gekühlte Formwerkzeug das Bauteil gleichzeitig mit einer Geschwindigkeit, die über der kritischen Abkühlgeschwindigkeit des Stahlbleches liegt, abgekühlt, sodass ein gehärtetes Bauteil erzeugt wird.

Der Vorteil bei den aluminiumbasierten Überzügen gegenüber den zinkbasierten Überzügen liegt darin, dass neben einem größeren Prozessfenster (z.B. hinsichtlich der Erwärmungsparameter) die fertigen Bauteile vor der Weiterverarbeitung nicht gestrahlt werden müssen. Darüber hinaus besteht bei aluminiumbasierten Überzügen nicht die Gefahr von Flüssigmetallversprödung und es können sich keine Mikrorisse im oberflächennahen Substratbereich an den ehemaligen Austenitkorngrenzen ausbilden, die bei Tiefen über 10 μm einen negativen Effekt auf die Dauerfestigkeit haben können.

Eine Schwierigkeit bei der Verwendung von aluminiumbasierten Überzügen ist jedoch, dass der Überzug beim Aufheizen einer Stahlplatine im Rollenherdofen vor der Warmumformung mit den keramischen Transportrollen aus Sinter-Mullit oder Quarzgut reagieren kann. Dabei dringt die beim Erwärmen flüssig werdende AlSi Schmelze in die porösen Rollen ein und führt nach der Verfestigung zu lokalen Dichteunterschieden. Hierdurch wird die Lebensdauer der Ofenrollen signifikant reduziert.

Nachteilig bei der Verwendung von aluminiumbasierten Überzügen, z.B. aus Aluminium-Silizium (AlSi, AS), ist zudem die mangelhafte Lackhaftung des umgeformten Bauteils bei der automobiltypischen kathodischen Tauchlackierung (KTL), wenn eine zu kurze Erwärmungszeit beim Presshärten verwendet wurde. Bei kurzen Erwärmungszeiten weist die Oberfläche eine geringe Rauheit auf, so dass keine ausreichende Lackhaftung erzielt wird.

Im Gegensatz zu den zinkbasierten Überzügen lassen sich aluminiumbasierte Überzüge nicht oder nur unzureichend phosphatieren und somit kann durch den Phosphatierschritt keine Verbesserung der Lackhaftung erzielt werden. Aus diesen Gründen müssen bisher bei der Verarbeitung von Platinen mit aluminiumbasierten Überzügen Mindesterwärmzeiten eingehalten werden, wodurch der Überzug mit Eisen durchlegiert und sich eine raue Oberflächentopografie ausbildet, die eine ausreichende Lackhaftung beim Lackieren des umgeformten Bauteils bewirkt.

Das Durchlegieren des Überzugs mit Eisen und die Ausbildung einer lackierfähigen Oberflächentopografie erfordern allerdings eine entsprechend lange Verweildauer im üblicherweise verwendeten Rollenherdofen, wodurch für diesen Überzug längere Öfen verwendet werden müssen, als es z. B. bei Material ohne Verzunderungsschutz der Fall ist. Denkbar wäre natürlich auch eine Reduzierung der Transportgeschwindigkeit der Platinen im Ofen, hierdurch würde sich aber die Taktzeit und somit auch die Wirtschaftlichkeit des Pressformhärteprozesses deutlich verschlechtern. Die Mindestverweildauer im Ofen wird somit durch den Überzug bestimmt und nicht durch das Grundmaterial, für das lediglich die Austenitumwandlung notwendig wäre. Für AS-Platinen werden deswegen, wie bereits erwähnt, angepasste, längere Öfen eingesetzt, um trotz der notwendigen Ofenverweilzeit hohe Taktraten zu erzielen. Diese sind jedoch teurer in der Anschaffung und im Betrieb und haben zudem einen sehr großen Platzbedarf.

Um diesen Problemen zu begegnen, ist es beispielsweise aus der Patentschrift DE 10 2004 007 071 B4 bekannt, die Prozesszeit der mit einem AlSi-Überzug versehenen Flachprodukte beim Verarbeiter dadurch zu verkürzen, dass das Durchlegieren des Überzugs und die Erwärmung des Stahlflachprodukts auf Umformtemperatur in zwei getrennten Arbeitsschritten durchgeführt wird. Dieses Vorgehen soll es erlauben, den Prozess der Durchlegierung des mit dem AlSi-Überzug versehenen Stahlflachprodukts beim Hersteller durchzuführen. Beim Verarbeiter soll dann die Erwärmung des mit dem dann bereits durchlegierten Überzug versehenen Stahlflachprodukts beispielsweise mittels Induktion oder Konduktion in optimal kurzer Zeit erfolgen können, ohne dass dabei auf die Ausbildung des Überzugs Rücksicht genommen werden muss. Als problematisch soll sich bei dem voranstehend erläuterten Vorschlag allerdings herausgestellt haben, dass der vollständig durchlegierte Überzug selbst sowohl während der Lagerung der vorproduzierten Stahlflachprodukte im Zwischenlager, als auch im Zuge der beim Verarbeiter durchlaufenen Arbeitsschritte einem korrosiven Angriff ausgesetzt ist. Dieses Problem ergibt sich aus dem Eisenanteil, der an der freien Oberfläche des durchlegierten Überzugs vorhanden ist.

Aus der Offenlegungsschrift WO 2009/095427 A1 ist bekannt, ein Verfahren zum Pressformhärten anzuwenden, bei dem eine zweistufige Wärmebehandlung stattfindet, wobei es in einem ersten Erwärmungsschritt zu einem nur unvollständigen Einlegieren von Eisen aus dem Stahlsubstrat in den AlSi-Überzug kommt. Anschließend soll das mit dem erfindungsgemäß nur unvollständig durchlegierten Überzug versehene Stahlprodukt auf Raumtemperatur abgekühlt und gelagert werden, bis es der Weiterverarbeitung zum jeweiligen Bauteil zugeführt wird. Da der AlSi-Überzug im ersten Erwärmungsschritt nur unvollständig mit Eisen legiert wird, soll der AlSi-Überzug auch nach dem ersten Erwärmungsschritt eine geringe Korrosionsanfälligkeit aufweisen, so dass seine Lagerung, sein Transport und die weiteren im Vorfeld der zweiten Wärmebehandlung durchgeführten Arbeitsschritte problemlos durchgeführt werden können, ohne dass dazu zusätzliche Maßnahmen erforderlich sind.

Vor seiner Umformung zu einem Bauteil soll das nach dem ersten Erwärmungsschritt erhaltene, erfindungsgemäß mit einem nur vorlegierten Überzug versehene Flachprodukt einen zweiten Erwärmungsschritt durchlaufen, bei dem die vollständige Durchlegierung mit Eisen stattfindet. Dieser zweite Erwärmungsschritt soll danach in der Regel beim Endverarbeiter durchgeführt werden, während der erste zu absolvierende Wärmebehandlungsschritt in der Regel beim Erzeuger der Stahlprodukte ablaufen soll.

Nachteilig ist hierbei jedoch, dass die Vorlegierung des Überzugs mit Eisen aus dem Grundwerkstoff die Breite des Prozessfensters beim zweiten Erwärmungsschritt, z.B. in einem Rollenherdofen, beim Verarbeiter verringert. Unter der Breite des Prozessfensters wird in diesem Zusammenhang die Differenz zwischen maximal zulässiger und minimal notwendiger Ofenverweilzeit verstanden. Durch die Vorlegierung des Überzugs mit Eisen wird zwar die zur vollständigen Durchlegierung mit Eisen notwendige, minimale Ofenverweildauer kürzer, jedoch verkürzt sich auch die maximal zulässige Ofenverweilzeit erheblich - es findet also nicht nur eine Verschiebung des Prozessfensters hin zu kürzeren Zeiten statt, sondern auch eine Verkleinerung. Ein großes Prozessfenster ist aber wichtig, um bei einem Fehler an der Presse (z. B. beim Transfer einer Platine in die Presse oder beim Entfernen von Bauteilen aus der Presse), dessen Behebung eine gewisse Zeit in Anspruch nimmt, nicht alle davor im Ofen befindlichen Platinen verwerfen zu müssen, da beim Überschreiten der maximal erlaubten Ofenverweilzeit die weitere Verarbeitung der Bauteile z.B. hinsichtlich der Punktschweißbarkeit nicht mehr gegeben ist. Nachteilig ist bei diesem Verfahren zudem der notwendige, doppelte Erwärmungsschritt, der die Gesamtkosten zur Herstellung des Bauteils deutlich erhöht.

Auch ist bereits aus dem deutschen Patent DE 697 06 387 T2 ein Stahlblech mit einer Aluminium-Silizium-Beschichtung bekannt, die als Wärmeschild für Auspuffleitungen in Kraftfahrzeugen verwendet wird. Die mit einem Schmelztauchverfahren aufgebrachte Aluminium-Silizium-Beschichtung besteht aus einer Legierung auf Aluminiumbasis, die zwischen 7 und 11 Gewichts-% Silizium und zwischen 87 und 93 Gewichts-% Aluminium enthält. Für die Beschichtung wird ein spektraler Emissionsgrad von unter 0,15 für alle Wellenlängen zwischen 1,5 und 15 μm angegeben.

Ferner wird in der deutschen Offenlegungsschrift DE 10 2016 102 504 A1 bereits ein Stahlblech oder Stahlband mit einem aluminiumbasierten und Silizium-enthaltenen Schmelztauchüberzug beschrieben. Hierbei weist das Schmelzbad einen Si-Gehalt von 8 bis 12 Gewichts-%, einen Fe-Gehalt von 1 bis 4 Gewichts-% und einen Rest Aluminium auf. Auf diesem Überzug ist eine Aluminiumoxid und/oder -hydroxid enthaltene Deckschicht angeordnet, welche durch eine anodische Oxidation, eine Plasmaoxidation, eine Heißwasserbehandlung bei Temperaturen von mindestens 90 °C oder einer Behandlung in Wasserdampf bei Temperaturen von mindestens 90 °C hergestellt wurde. Die mittlere Schichtdicke der Deckschicht ist kleiner als 4 μm und größer 0,05 μm.

Aufgabe der Erfindung ist es, ein Stahlflachprodukt mit einer aluminiumbasierten Beschichtung, insbesondere zur Pressformhärtung von Bauteilen, anzugeben, die bei einer Erwärmung in einem Ofen verkürzte, minimal notwendige Ofenverweilzeiten und ein ausreichend großes Prozessfenster bietet. Auch soll bevorzugt das Stahlflachprodukt mit der aluminiumbasierten Beschichtung eine hervorragende Eignung zur Pressformhärtung aufweisen. Des Weiteren soll ein verbessertes Verfahren zur Herstellung eines Stahlflachprodukts mit einer aluminiumbasierten Beschichtung ein kostengünstiges Verfahren zur Herstellung von pressgehärteten Bauteilen aus derartigen Stahlflachprodukten und ein pressgehärtetes Bauteil aus derartigen Stahlflachprodukten angegeben werden.

Die Lehre der Erfindung umfasst ein Stahlflachprodukt für eine anschließende austenitisierende Glühbehandlung in einem Ofen mit einer Ofentemperatur im Bereich von 880 bis 950 °C, mit aluminiumbasierter Beschichtung, wobei die Beschichtung einen im Schmelztauchverfahren aufgebrachten, aluminiumbasierten Überzug mit 1,8 bis 15 Massenprozent Silizium, vorteilhaft mit 5 bis 13 Massenprozent Silizium, noch vorteilhafter mit 8 bis 11 Massenprozent Silizium aufweist, dadurch gekennzeichnet ist, dass der Überzug - zur Festlegung eines auf den genannten Bereich der Ofentemperatur während der austenitisierenden Glühbehandlung bezogenen Absorptionsgrades der Oberfläche der Beschichtung für Wärmestrahlung in einem Bereich zwischen 0,35 und 0,95 - ausgehend von der Oberfläche innerhalb der ersten 0,05 μm einen mittleren Siliziumgehalt zwischen 25 und 70 Massenprozent aufweist. Sowohl der Siliziumgehalt als auch die Absorptionsgrade beziehen auch auf den Zustand beziehungsweise die Messung vor der Austenitisierung.

Bei diesem Aufbau der Beschichtung ergibt sich, dass die Oberfläche der Beschichtung die Oberfläche des Überzugs ist. Im Zusammenhang mit einer austenitisierenden Glühbehandlung des Stahlflachprodukts dient die Beschichtung als Verzunderungsschutz. Das Stahlflachprodukt mit der erfindungsgemäßen aluminiumbasierten Beschichtung eignet sich besonders zur Herstellung von pressformgehärteten Bauteilen, bei der das so beschichtete Stahlflachprodukt vor der Pressformhärtung einer austenitisierenden Glühbehandlung unterzogen wird. Der Absorptionsgrad der Beschichtung bezieht sich somit auf einen Zustand vor der austenitisierenden Glühbehandlung und vor der Pressformhärtung.

Im Zusammenhang mit der Erfindung ist unter dem Begriff "aluminiumbasiert" eine Beschichtung zu verstehen, die als Hauptbestandteil Aluminium enthält. Vorzugsweise ist der Aluminium-Gehalt der Beschichtung größer als 50%. Unter Stahlflachprodukten werden in üblicher Weise Stahlbleche oder Stahlbänder begrifflich zusammengefasst.

Außerdem umfasst die Lehre der Erfindung ein Verfahren zur Herstellung eines Stahlflachprodukts für eine anschließende austenitisierende Glühbehandlung in einem Ofen mit einer Ofentemperatur im Bereich von 880 bis 950 °C, mit einer aluminiumbasierten Beschichtung mit 1,8 bis 15 Massenprozent Silizium, vorteilhaft mit 5 bis 13 Massenprozent Silizium, noch vorteilhafter mit 8 bis 11 Massenprozent Silizium, wobei als Beschichtung der aluminiumbasierte Überzug im Schmelztauchverfahren auf das Stahlflachprodukt aufgebracht wird und wobei das Stahlflachprodukt mit dem Überzug nach dem Schmelztauchprozess einer abtragenden Oberflächenbehandlung unterzogen wird, bei der ausgehend von der Oberfläche der Beschichtung, überwiegend beziehungsweise bevorzugt Aluminium aus der Beschichtung chemisch oder elektrochemisch teilweise entfernt wird, um den prozentualen Anteil von Silizium im Vergleich zu dem Anteil von Aluminium in der Oberfläche des Überzugs derart zu erhöhen, dass die Oberfläche der Beschichtung einen Absorptionsgrad für Wärmestrahlung aufweist, der 0,35 bis 0,95, insbesondere 0,40 bis 0,80, vorteilhaft 0,45 bis 0,70, beträgt, wobei der Absorptionsgrad auf den genannten Bereich der Ofentemperatur während der austenitisierenden Glühbehandlung bezogen ist, und wobei für die abtragende Oberflächenbehandlung ein wässriges Medium enthaltend Alkalimetallhydroxide oder Alkalicarbonate als Abtragsmittel verwendet wird.

Bei diesem Aufbau der Beschichtung ergibt sich, dass die Oberfläche der Beschichtung die Oberfläche des Überzugs ist. Das Verfahren eignet sich besonders zur Herstellung von pressformgehärteten Bauteilen, bei der das so beschichtete Stahlflachprodukt vor der Pressformhärtung einer austenitisierenden Glühbehandlung unterzogen wird. Die abtragende Oberflächenbehandlung findet vor einer austenitisierenden Glühbehandlung und einer Pressformhärtung des erfindungsgemäßen Stahlflachprodukts statt.

Auch umfasst die Lehre der Erfindung ein Verfahren zur Herstellung von pressgehärteten Bauteilen aus Stahlflachprodukten mit einer erfindungsgemäß behandelten aluminiumbasierten Beschichtung, wobei die Stahlflachprodukte zumindest abschnittsweise auf eine Temperatur über Austenitisierungstemperatur Ac3 erhitzt werden, anschließend bei dieser Temperatur umgeformt und mit einer Geschwindigkeit abgekühlt werden, die zumindest abschnittsweise, vorzugsweise insgesamt, oberhalb der kritischen Abkühlgeschwindigkeit für eine Martensitbildung liegt.

Des Weiteren umfasst die Erfindung ein pressgehärtetes Bauteil aus den erfindungsgemäßen mit einer aluminiumbasierten, 1,8 bis 15 Massenprozent Silizium enthaltenen Beschichtung versehenen Stahlflachprodukten, hergestellt nach dem zuvor beschriebenen Verfahren. Vorteilhaft sind 5 bis 13 Massenprozent, noch vorteilhafter mindestens 8 bis 11 Massenprozent Silizium in der aluminiumbasierten Beschichtung vorhanden. Die Angaben in Massenprozent beziehen sich auf den Überzug des Stahlflachproduktes vor einer Weiterverarbeitung, insbesondere vor dem Erwärmen und Presshärten.

Silizium ist notwendig, um die Ausbildung einer dicken und spröden intermetallischen $Fe_2Al_5$-Phase zwischen Stahl und Überzug bei der Schmelztauchbeschichtung zu vermeiden. Stattdessen bildet sich bei Zugabe der oben angegebenen Gehalte an Silizium als intermetallische Phase eine dünnere ternäre Fe-Si-Al Schicht als intermetallische Phase aus, die eine bessere Umformbarkeit aufweist.

Als aluminiumbasierte Überzüge werden nachfolgend metallische Überzüge verstanden, bei denen Aluminium der Hauptbestandteil in Massenprozent ist. Beispiele für mögliche aluminiumbasierte Überzüge sind Aluminium-Silizium (AS), Aluminium-Zink-Silizium, sowie dieselben Überzüge mit Beimischungen einzelner oder mehrerer zusätzlicher Elemente, wie z.B. Mg, Mn, Ti, Pb, Ni, Zr, Hf, Ce, La von in Summe maximal 30 Gewichts-%.

Nicht vorlegiert und nicht durchlegiert bedeutet, dass die infolge des Schmelztauchprozesses ausgebildete ternäre intermetallische Fe-Al-Si Phase zwischen Stahl und Überzug noch vorhanden ist und der Eisengehalt im Überzug (ohne Berücksichtigung der ternären intermetallischen Fe-Al-Si Phase zwischen Stahl und Überzug) unterhalb von 5 Massenprozent, vorteilhaft unter 4 Massenprozent liegt.

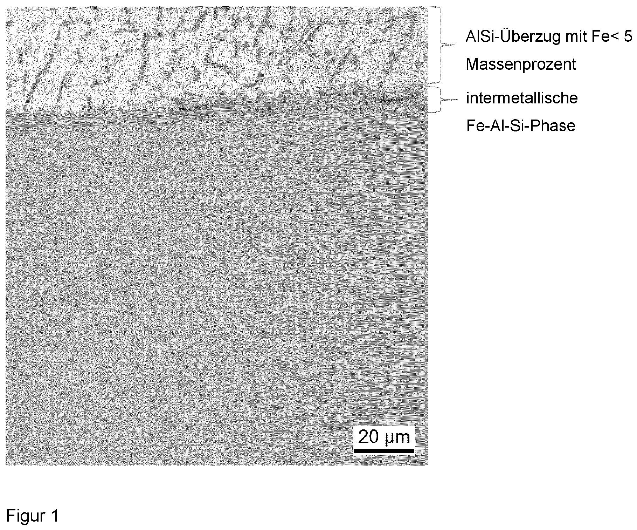

In Figur 1 ist beispielhaft eine AlSi-Beschichtung vor der eigentlichen Wärmebehandlung dargestellt, um die hier beschriebenen Bereiche zu verdeutlichen.

Zudem wurde erkannt, dass die Oberfläche des Überzugs bei einer Bezugstemperatur, die der mittleren Ofentemperatur während der Glühbehandlung entspricht, einen Absorptionsgrad für Wärmestrahlung zwischen 0,35 und 0,95 aufweisen sollte, um deutlich erhöhte Aufheizraten zu erreichen. Vorteilhaft liegt der Absorptionsgrad zwischen 0,40 bis 0,80, besonders vorteilhaft zwischen 0,45 bis 0,70.

Mit Hilfe von Reflexionsmessungen über einen großen Spektralbereich lassen sich die entsprechenden Absorptionsspektren zur Bestimmung des Absorptionsgrades für die Raumtemperatur oder die mittlere Ofentemperatur berechnen.

Strahlung, die auf einen Körper trifft, wird teilweise reflektiert, teilweise transmittiert, oder durch den Körper absorbiert. Daher gilt für Reflexion $\rho$, Transmission $\tau$ und Absorption $\alpha$ die allgemeine Beziehung:

$$\rho + \tau + \alpha = 1$$

Für nicht transparente Körper ist $\tau = 0$ und somit gilt für die Absorption:

$$\alpha = 1 - \rho$$

Mit Hilfe von Reflexionsmessungen über einen großen Spektralbereich lassen sich die entsprechenden Absorptionsspektren berechnen. Die Auswertung des Gesamtabsorptionsgrades $\alpha(T)$ bei der Referenztemperatur $T$ erfolgt dann über die Formel:

$$\alpha(T) = \frac{\int_{\lambda_1}^{\lambda_2} \alpha_\lambda \cdot i_\lambda(T) \, d\lambda}{\int_{\lambda_1}^{\lambda_2} i_\lambda(T) d\lambda}$$

Die spektrale Strahlungsleistung $i_\lambda(T)$ des Schwarzkörperstrahlers bei einer Wellenlänge von 2 und der Referenztemperatur *T* kann nach Planck mit dem Planckschen Wirkungsquantum h, der Lichtgeschwindigkeit c und der Boltzmann-Konstante *k* berechnet werden:

$$i_\lambda(T) = \frac{2\pi hc^2}{\lambda^5 \left( e^{\frac{hc}{\lambda kT}} - 1 \right)}$$

Der Auslieferungszustand der Blechoberfläche vor der austenitisierenden Glühbehandlung und vor dem Presshärten wurde bei Raumtemperatur mittels Reflexionsmessungen bestimmt. Unter Raumtemperatur wird ein Temperaturbereich von 18 bis 24 °C verstanden, insbesondere eine Temperatur von 20 °C. Hierzu kamen ein UV-Vis-Spektrometer für Messungen im Bereich 250-2500 nm und ein Infrarotspektrometer im Bereich von 2,5-25 $\mu$m zur Anwendung. Für die Messungen wurden integrierende Kugeln, sogenannte Ulbricht-Kugeln, verwendet. Im Bereich zwischen 4170 und 4470 nm erfolgte eine Korrektur der Spektren, um die $CO_2$-Absorption aus der Luft zu kompensieren. Aus den Reflexionsspektren wurden Absorptionsspektren berechnet. Bei einem Absorptionsgrad, der auf Raumtemperatur bezogen ist, wird als Referenztemperatur *T* Raumtemperatur angenommen und mit dieser Temperatur der Gesamtabsorptionsgrad $\alpha(T)$ über die oben genannten Formeln berechnet. Bei einem Absorptionsgrad, der auf eine mittlere Ofentemperatur während der austenitisierenden Glühbehandlung bezogen ist, wird diese Temperatur als Referenztemperatur *T* zur Berechnung des Gesamtabsorptionsgrades $\alpha(T)$ verwendet. Absorptionsgrade für verschiedene Referenztemperaturen lassen sich nicht ineinander umrechnen, da sie über das Absorptionsspektrum miteinander verknüpft sind. Aus diesem Grund werden für den Absorptionsgrad, der auf Raumtemperatur bezogen ist, und den Absorptionsgrad, der auf eine mittlere Ofentemperatur während der austenitisierenden Glühbehandlung bezogen ist, unterschiedliche Wertebereiche beansprucht.

Erfindungsgemäße Absorptionsgrade der Beschichtungsoberfläche führen zu höheren Aufheizraten im Ofen und damit zu einer Reduzierung der minimal notwendigen Ofenverweilzeit. Dabei verschiebt sich das Prozessfenster lediglich um den bei der Erwärmung eingesparten Zeitraum und es findet somit keine Verkleinerung des Prozessfensters statt, da der Überzug nicht mit Eisen vorlegiert ist. In Versuchen zur Ermittlung der Aufheizraten im Temperaturbereich von Raumtemperatur bis 900 °C wurde je nach Absorptionsgrad der Oberfläche eine Zunahme der Aufheizraten von bis zu 86 % ermittelt.

Somit wird dem Verarbeiter ein Stahlband bzw. Stahlblech für die Pressformhärtung zur Verfügung gestellt, welches erhebliche Vorteile durch kürzere Ofenverweilzeiten aufweist, ohne die Nachteile der bekannten teilweisen oder vollständigen Vorlegierung des Überzugs mit Eisen in Kauf nehmen zu müssen.

Erfindungsgemäß wird dazu das Stahlblech oder Stahlband mit dem Überzug nach dem Schmelztauchprozess und vor dem Prozess der Pressformhärtung einer abtragenden Oberflächenbehandlung unterzogen, bei der, ausgehend von der Oberfläche des Überzugs, Aluminium aus dem Überzug chemisch oder elektrochemisch zumindest teilweise entfernt wird, um den prozentualen Anteil von Silizium im Vergleich zu dem Anteil von Aluminium in der Oberfläche des Überzugs zu erhöhen.

Bei den Untersuchungen wurde überraschend festgestellt, dass durch eine oberflächennahe, selektive Entfernung von bevorzugt beziehungsweise überwiegend Aluminium aus dem Überzug die im Überzug enthaltene Silizium-Phase bzw. Siliziumreiche Phase zurückbleibt, wodurch eine deutliche Erhöhung des Absorptionsgrades der Wärmestrahlung im Ofen erzielt wird und eine deutlich höhere Aufheizrate bei der Erwärmung zur Folge hat.

Es wurde zudem vorteilhaft festgestellt, dass die nach der abtragenden Oberflächenbehandlung verbliebenen, oberflächennahen Silizium-Phasen bzw. Silizium-reichen Phasen während des Erwärmens im Rollenherdofen beim Erreichen und Überschreiten der eutektischen Temperatur des AlSi-Überzugs nicht mit aufschmelzen. Hierdurch wird die Reaktion zwischen schmelzflüssiger Phase und den keramischen Ofenrollen zum Transport der Platinen vermindert, was die Lebensdauer der Rollen im Ofen deutlich erhöht und zu einer Senkung der Instandhaltungskosten führen kann.

Für die Beschichtung beziehungsweise den Überzug nach der abtragenden Oberflächenbehandlung gilt weiterhin, dass die Beschichtung beziehungsweise der Überzug aluminiumbasiert ist.

Erfindungsgemäß weist der Überzug nach der abtragenden Oberflächenbehandlung, ausgehend von der Oberfläche der Beschichtung und in üblicher Weise senkrecht in Dickenrichtung der Beschichtung gesehen innerhalb der ersten 0,05 $\mu$m einen mittleren Siliziumgehalt zwischen 25 und 70 Massenprozent, vorteilhaft zwischen 30 und 60 Massenprozent und besonders vorteilhaft zwischen 35 und 55 Massenprozent auf. Als geeignete Methode zur Messung des mittleren Si-Gehalts kann hier z.B. GDOES genutzt werden, sofern auf der zu messenden Probenoberfläche vor der Analyse eine geeignete Vorbeschichtung aufgedampft wird. Diese Vorbeschichtung dient zum einen dazu, im Zeitraum bis ein stabiler und gleichmäßiger Materialabtrag stattfindet, nur die Vorbeschichtung abzutragen, und zum anderen dazu, die Lücken zwischen den herausstehenden Si-Phasen aufzufüllen, um einen gleichmäßigen Abtrag zu ermöglichen. Das Element für die Vorbeschichtung ist dabei so zu wählen, dass es bei der Verarbeitung der GDOES-Rohdaten einfach herausgerechnet werden kann. Bei eigenen Versuchen hat sich eine dünne Gold-Beschichtung als zweckmäßig erwiesen. Die zur Tiefeninformation herangezogene Abtragszeit (Sputterzeit) muss dabei so angepasst werden, dass der Zeitraum, in dem ausschließlich Gold abgetragen wird, unberücksichtigt bleibt.

Erfindungsgemäß wird als Abtragsmittel für die chemische Behandlung vorteilhaft ein wässriges Medium, das Alkalimetallhydroxide oder Alkalicarbonate enthält, verwendet, wie zum Beispiel Natriumhydroxid, Kaliumhydroxid oder Natriumcarbonat, in Konzentrationen von typischerweise 0,5 bis 30 Massenprozent. Günstig ist es, einen pH-Wert von > 10, vorteilhaft > 11 und besonders vorteilhaft > 12 einzuhalten. In einer vorteilhaften Weiterbildung kann das wässrige Medium zusätzlich bis zu 10 Massenprozent Fluoride (z. B. Natriumfluorid), bis zu 2 Massenprozent Tenside zur Entfernung organischer Verunreinigungen, und/oder Netzmittel zur Verbesserung der Benetzbarkeit enthalten.

Für elektrochemische Abtragsverfahren kommen neben alkalischen auch neutrale und saure, wässrige Elektrolytmedien infrage, die eine elektrolytische Leitfähigkeit von 100 mS/m übersteigen. Die erfindungsgemäße Abtragung erfolgt anodisch. Dem Elektrolytmedium können zur Leitfähigkeitssteigerung Leitsalze zugesetzt sein. Das Elektrolytmedium kann weiterhin Komplexbildner (z. B. Fluorid, Ethylendiamintetraessigsäure, Polycarboxylate, Citrate, Gluconate) enthalten, um den Elektrolyten zu stabilisieren. Die elektrochemische Abtragsbehandlung kann sowohl potenzialkontrolliert als auch unter galvanostatischen Bedingungen ausgeführt werden.

In Versuchen wurde weiterhin erkannt, dass der Absorptionsgrad der Oberfläche und damit die Aufheizrate im Ofen vom Materialabtrag bei der abtragenden Oberflächenbehandlung abhängig ist. Besonders sicher wird der geforderte Absorptionsgrad der Oberfläche für die bei der Erwärmung im Ofen aufgenommene Wärmestrahlung erreicht, wenn bei der abtragenden Oberflächenbehandlung ein Massenverlust der des Überzugs pro Blech- oder Bandseite des Stahlflachprodukts von 0,2 bis 20 $g/m^2$, vorteilhaft von 0,5 bis 10 $g/m^2$, besonders vorteilhaft von 1,0 bis 5 $g/m^2$ angestrebt wird.

Besonders vorteilhaft kann die chemische Oberflächenbehandlung in einem Tauch- oder Spritzverfahren durchgeführt werden.

Besonders wirtschaftlich ist das erfindungsgemäße Verfahren, wenn die abtragende Oberflächenbehandlung kontinuierlich in einer Schmelztauchbeschichtungsanlage im Anschluss an das Schmelztauchen erfolgt.

In einer weiteren, vorteilhaften Weiterbildung der Erfindung ist vorgesehen, dass im Anschluss an die abtragende Oberflächenbehandlung eine elektrochemische Anodisierung, eine Plasmaoxidation, oder eine plasmaelektrolytische Oxidation der Oberfläche des Überzugs erfolgt, bei der eine oxidische Deckschicht auf der zuvor abtragsbehandelten Oberfläche des Überzugs ausgebildet wird.

Durch die Ausbildung einer definierten, Aluminiumoxid und/oder -hydroxid enthaltenen Deckschicht können die vorgenannten positiven Aspekte der Abtragsbehandlung der Oberfläche von aluminiumbasierten Beschichtungen nochmals verbessert werden. Vorteilhaft beträgt die mittlere Schichtdicke der Deckschicht kleiner als 1 $\mu$m und größer als 0,05 $\mu$m, vorteilhaft kleiner als 0,8 $\mu$m und größer als 0,1 $\mu$m. Die Deckschicht sollte dabei Massenanteile an Aluminiumoxid und/oder -hydroxid von zumindest 50 %, vorteilhaft mehr als 70 % aufweisen. Bei diesem Aufbau der Beschichtung ergibt sich, dass die Oberfläche der Beschichtung die Oberfläche der Deckschicht, für die die erfindungsgemäßen Absorptionsgrade gelten.

Die erfindungsgemäße, zusätzliche elektrolytische Anodisierung der Oberfläche des Überzugs, erfolgt vorteilhaft in einem Medium auf Basis von Borsäure, Zitronensäure, Schwefelsäure, Oxalsäure, Chromsäure, Alkylsulfonsäuren, Carbonsäuren, Alkalicarbonaten, Alkaliphosphaten, Phosphorsäure oder Flusssäure.

In einer vorteilhaften Ausgestaltung der Erfindung wird die Deckschicht ebenfalls in einem kontinuierlichen Prozess im Anschluss an die abtragende Oberflächenbehandlung auf die Oberfläche des Überzugs aufgebracht.

Die auf der erfindungsgemäß abtragsbehandelten Oberfläche des Überzugs zusätzlich aufgebrachte Deckschicht trennt dabei vorteilhaft zusätzlich den metallischen, aluminiumbasierten Überzug des Stahlbandes von der keramischen Rollenoberfläche im Rollenherdofen. Die Deckschicht schmilzt beim Erwärmen der Platinen nicht auf, so dass eine Reaktion zwischen Überzug und Ofenrolle wirkungsvoll unterbunden wird.

Zusammenfassend ist als Ergebnis der Erfindung Folgendes festzuhalten: Während bislang beispielsweise bei Blechdicken von 1,5 mm Glühzeiten im Rollenherdofen von z. B. 4 Minuten bei 930 °C Ofentemperatur für das Durchlegieren der Beschichtung mit Eisen und die Ausbildung einer lackierfähigen Oberflächentopografie erforderlich sind, werden beim erfindungsgemäßen Verfahren bei einer Blechdicke von 1,5 mm Glühzeiten von beispielsweise 3 Minuten oder weniger benötigt (abhängig von der Intensität der Abtragsbehandlung), die Glühzeit wird somit signifikant reduziert. Die maximal möglichen Ofenzeiten ändern sich durch die abtragsbehandelte Oberfläche des Überzugs oder die zusätzlich aufgebrachte Deckschicht nur insoweit, als dass das Prozessfenster hin zu kürzeren Zeiten verschoben wird, ohne aber kleiner zu werden. Alternativ können auch die ersten Ofenzonen in einem Rollenherdofen mit deutlich abgesenkter Temperatur gefahren werden, so dass sich die gleiche Ofendurchlaufzeit, Aufheizrate und Taktzeit wie bei unbehandeltem Material unter Verwendung hoher Temperaturen für die ersten Ofenzonen ergibt. Eine weitere Möglichkeit besteht darin, den Abstand der Platinen im Ofen zu vergrößern und mit erhöhter Transportgeschwindigkeit, aber gleicher Taktrate durch den Ofen zu fahren. Hierdurch würde im Fall eines Anlagenstillstandes die Menge an Ausschuss beim hier verwendeten Beispiel um etwa 25 % reduziert werden können.

Für dickere Bleche oder geringere Ofentemperaturen verlängert sich die Ofenzeit entsprechend.

Nachfolgend wird anhand der im Anhang dargestellten Figuren die Erfindung näher beschrieben.

Die Tabelle 1 zeigt die ermittelten Absorptionsgrade bei Raumtemperatur und für unterschiedliche Bezug- bzw. Referenztemperaturen ($T_{ref}$) im Ofen für beispielhafte Oberflächenbehandlungen durch ein Tauchverfahren bei Variation der Behandlungstemperatur und der Behandlungszeit. Weiterhin sind die Auswirkungen auf den Materialabtrag (Summe von Ober- und Unterseite), die Aufheizrate im Ofen und den mittleren Si-Gehalt an der Oberfläche des Überzugs dargestellt.

Tabelle 1

| wässr. Behandlungsmedium | Temperatur / °C | Zeit / s | pH | Abtrag / g/m$^2$ | Ø Aufheizrate (22 - 900 °C) / K/s | Mittlerer Si-Gehalt (0-0,05 $\mu$m) / Massen-% | Absorptionsgrad ($T_{ref}$) | | | | erfindungsgemäß |
|---|---|---|---|---|---|---|---|---|---|---|---|
| | | | | | | | 22 °C | 900 °C | 950 °C | 1000 °C | |
| unbehandelt | - | - | - | - | 6,0 | 19,4 | 0,05 | 0,22 | 0,23 | 0,23 | nein |
| NaOH (100 g/l) | 40 | 10 | 13 | 1,8 | 7,9 | 33,1 | 0,09 | 0,37 | 0,38 | 0,39 | ja |
| | 40 | 30 | 13 | 5,3 | 9,1 | 28,7 | 0,23 | 0,46 | 0,46 | 0,46 | ja |
| | 70 | 10 | 13 | 13,2 | 9,8 | 25,1 | 0,31 | 0,48 | 0,48 | 0,48 | ja |
| | 70 | 30 | 13 | 44,0 | 11,3 | 40,4 | 0,27 | 0,50 | 0,50 | 0,50 | ja |
| NaOH (200 g/l) | 40 | 10 | 14 | 3,6 | 8,6 | 28,9 | 0,16 | 0,44 | 0,44 | 0,44 | ja |
| | 40 | 30 | 14 | 9,6 | 9,4 | 22,2 | 0,31 | 0,47 | 0,47 | 0,46 | nein |
| | 24 | 10 | 14 | 0,9 | 6,9 | 31,9 | 0,06 | 0,29 | 0,29 | 0,30 | nein |
| | 24 | 30 | 14 | 2,6 | 8,6 | 28,0 | 0,12 | 0,42 | 0,42 | 0,42 | ja |
| NaOH (25 g/l) | 45 | 10 | 13 | 2,0 | 8,4 | 30,5 | 0,09 | 0,38 | 0,39 | 0,39 | ja |
| NaOH (150 g/l) | 24 | 30 | 14 | 2,0 | 7,7 | 29,4 | 0,08 | 0,36 | 0,37 | 0,37 | ja |
| NaOH (5 g/l) + Chemetall Gardobond H7390 (4 g/l) | 70 | 10 | 13 | 1,3 | 6,7 | 34,0 | 0,07 | 0,35 | 0,36 | 0,37 | ja |
| | 70 | 30 | 13 | 4,4 | 8,4 | 28,4 | 0,23 | 0,46 | 0,46 | 0,46 | ja |

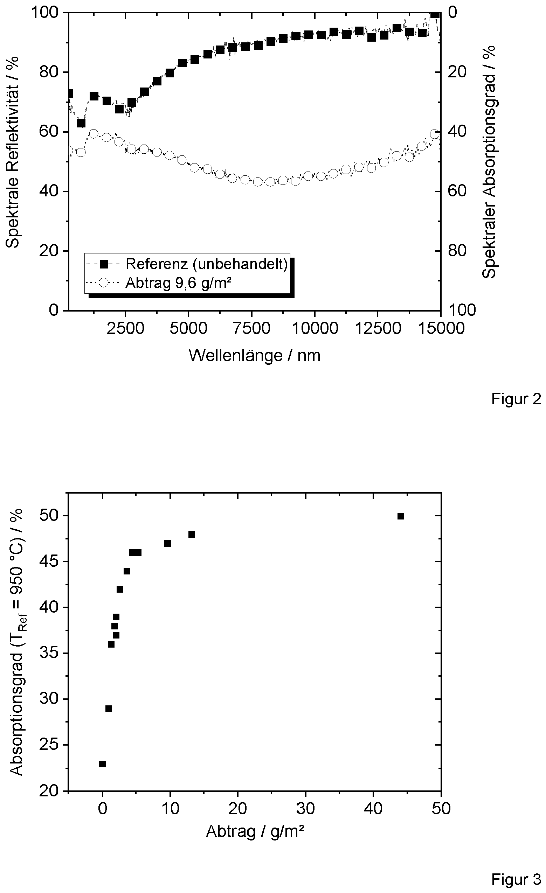

In Figur 2 ist ein beispielhaftes Reflexions- beziehungsweise Absorptionsspektrum einer mit AS beschichteten Oberfläche eines Stahlblechs mit einem beidseitigen Materialabtrag (Summe von Ober- und Unterseite) von 9,6 g/m$^2$ im Vergleich zu einer unbehandelten Referenzprobe gezeigt. Die höhere Absorption der erfindungsgemäß behandelten Oberfläche über den dargestellten Spektralbereich von 250 nm bis 15 $\mu$m ist sehr deutlich erkennbar.

Die Abhängigkeit des Gesamtabsorptionsgrades vom beidseitigen Materialabtrag bei einer Referenztemperatur von 950 °C ist in Figur 3 dargestellt. Je höher der Materialabtrag ist, umso größer ist der Absorptionsgrad.

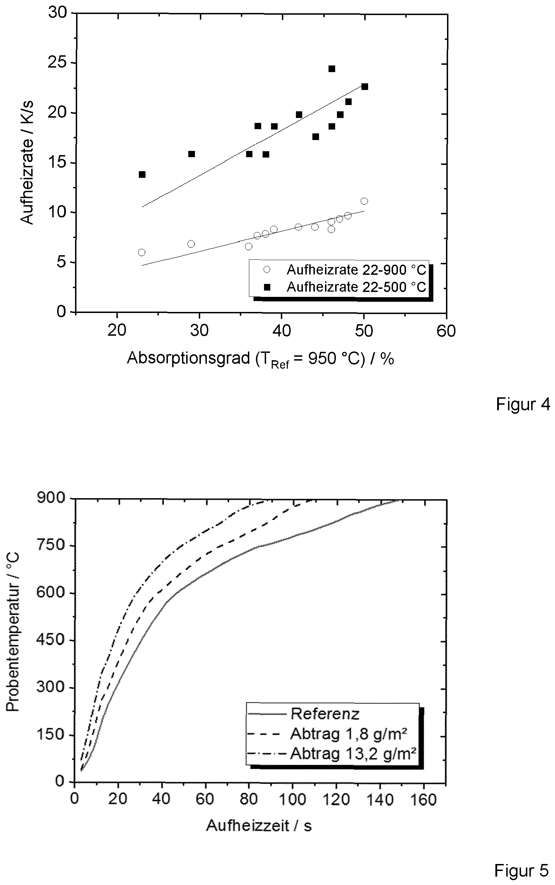

Korreliert man die Aufheizrate mit unterschiedlichen Gesamtabsorptionsgraden bei der Ofentemperatur als Referenztemperatur, so ergeben sich lineare Zusammenhänge, wie in Figur 4 dargestellt. Hier wurden die durchschnittlichen Aufheizraten zum Erreichen von 500 °C und 900 °C in einem Glühofen mit einer mittleren Ofentemperatur von 950 °C gezeigt. Die größere Streuung der Messpunkte im Temperaturintervall 22-500 °C ergibt sich aus einer mit 3 s pro Messpunkt vergleichsweise kleinen Abtastrate während der Aufzeichnung der Aufheizkurven.

Die Versuche haben gezeigt, dass der Absorptionsgrad bei einer Referenztemperatur, die der Glühtemperatur im Bereich von 880 bis 950 °C während der Warmumformung entspricht, vorteilhafterweise zwischen 0,35 und 0,95, vorteilhaft zwischen 0,40 und 0,80, besonders vorteilhaft zwischen 0,45 und 0,70, liegen sollte.

Die Oberflächenbehandlungen wurden an AS-beschichtetem Probematerial durch Tauchen in wässrigen Medien durchgeführt. Nach der Behandlung wurden die Proben mit vollentsalztem Wasser gespült und mit Warmluft getrocknet. Der Materialabtrag ist als Summe von Ober- und Unterseite angegeben und wurde durch Differenzwägung vor/nach der Behandlung bestimmt.

Zur Bestimmung der Aufheizrate wurden Proben mit einem Thermoelement kontaktiert und in einen Glühofen überführt, der eine Ofentemperatur von 950 °C aufwies. Die Aufheizraten wurden als Mittelwerte bis zum Erreichen der Zieltemperatur, hier z. B. 900 °C, bestimmt. Die Aufheizraten stellen eine Systemeigenschaft dar, die z. B. von Blechdicke, Kontaktflächen, Ofentyp und den eingestellten Ofenzonentemperaturen abhängig ist. Die absoluten Werte lassen sich deshalb nur innerhalb einer Versuchsreihe miteinander vergleichen. Dagegen stellen Werte wie der mittlere Silizium-Gehalt im oberflächennahen Bereich der Beschichtung oder der Absorptionsgrad der Oberfläche Materialeigenschaften dar.

In der Figur 5 sind drei Beispiele für Aufheizkurven bis zum Erreichen von 900 °C gezeigt.

Die mittleren Silizium-Gehalte in einer Tiefe im Bereich 0 - 0,05 $\mu$m ausgehend von der Oberfläche des Überzugs wurden aus GDOES-Messungen bestimmt. Um eine oberflächensensitive Messung zu ermöglichen, wurden die Proben zuvor mit einem organischen Lösemittel in einem Ultraschallbad gereinigt und anschließend mit einer dünnen Goldschicht (ca. 10 bis 50 nm) bedampft. Um den mittleren Silizium-Gehalt des Materials vor dem Presshärten aus den GDOES-Messungen zu ermitteln, wurde das Silizium-Signal im Bereich von 0 bis 0,05 $\mu$m integriert und dieser Wert durch 0,05 $\mu$m geteilt.

Der Figur 6 ist zu entnehmen, dass ein eindeutiger Zusammenhang zwischen Materialabtrag und der Aufheizrate gegeben ist. Je größer der Materialabtrag ist, umso größer ist die Aufheizrate.

In Figur 7 ist die Abhängigkeit der mittleren Aufheizrate zwischen 22 und 900 °C gegen den mittleren Silizium-Gehalt in einer Tiefe im Bereich 0 - 0,05 $\mu$m ausgehend von der Oberfläche des Überzugs dargestellt. Die erfindungsgemäße, abtragende Oberflächenbehandlung führt bereits bei einem kleinen Materialabtrag zu einer deutlichen Steigerung der Aufheizrate.

Als geeignete Medien zur Abtragsbehandlung haben sich solche mit einem pH >10 als vorteilhaft, pH >11 als vorteilhafter und pH >12 als besonders vorteilhaft herausgestellt. Abhängig vom pH-Wert lässt sich der Absorptionsgrad der Oberfläche über Temperatur und Konzentration des Behandlungsmediums und über die Behandlungsdauer einstellen.

Bei der elektrochemischen Oberflächenbehandlung können grundsätzlich die gleichen Abtragsmittel wie für die rein chemische Oberflächenbehandlung verwendet werden.

Jedoch sind hierbei neben alkalischen auch neutrale und saure wässrige Elektrolytmedien geeignet, die eine elektrolytische Leitfähigkeit von 100 mS/m übersteigen.

Ein erstes positives Verhalten in Bezug auf höhere Aufheizraten wurde bei einem Materialabtrag des Überzugs pro Blech- oder Bandseite des Stahlflachprodukts von 0,2 g/m$^2$ gefunden. Ein höherer Materialabtrag führt zu höheren Aufheizraten. Abtragsmengen von über 20 g/m$^2$ bringen keine weiteren Vorteile und sind damit unwirtschaftlich. Der vorteilhafte Bereich für den Massenabtrag des Überzugs pro Blech- oder Bandseite des Stahlflachprodukts kann deshalb mit 0,2 bis 20 g/m$^2$, vorteilhafter 0,5 bis 10 g/m$^2$, besonders vorteilhaft mit 1,0 bis 5 g/m$^2$, angegeben werden.

Aufgrund der Ergebnisse liegt ein optimaler Bereich für den mittleren Si-Gehalt ausgehend von der Oberfläche des Überzugs im Bereich bis zu 0,05 $\mu$m zwischen 25 und 70 Massen-%, vorteilhaft 30 und 60 Massen-%, besonders vorteilhaft zwischen 35 und 55 Massen-%.

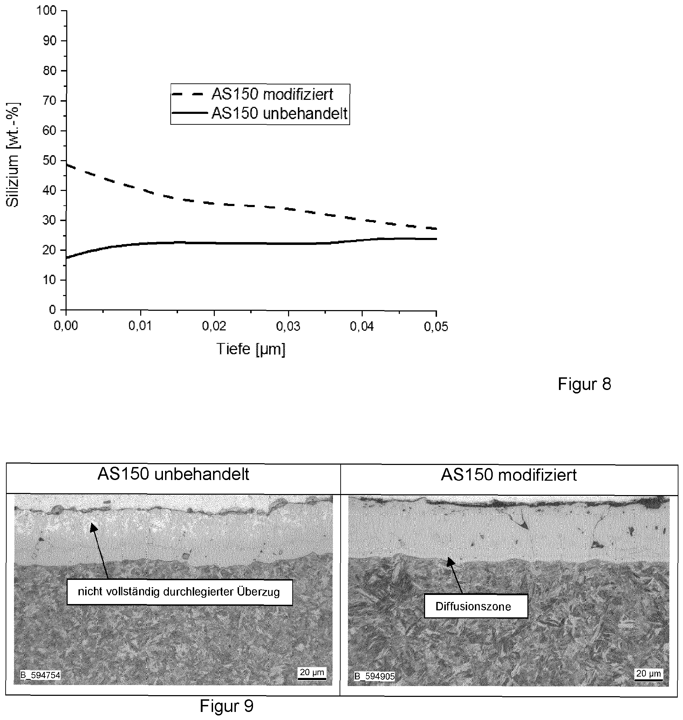

In Figur 8 sind beispielhaft GDOES Analyseergebnisse für den Siliziumgehalt in den ersten 0,05 $\mu$m ausgehend von der Oberfläche eines AS150 Überzugs dargestellt. Die unbehandelte AS150 Oberfläche weist hier einen mittleren Si-Gehalt im Bereich von 20 Massenprozent auf. Die erfindungsgemäß modifizierte AS150 Oberfläche weist hingegen einen erheblich höheren mittleren Gehalt an Si von etwa 35 Massenprozent auf.

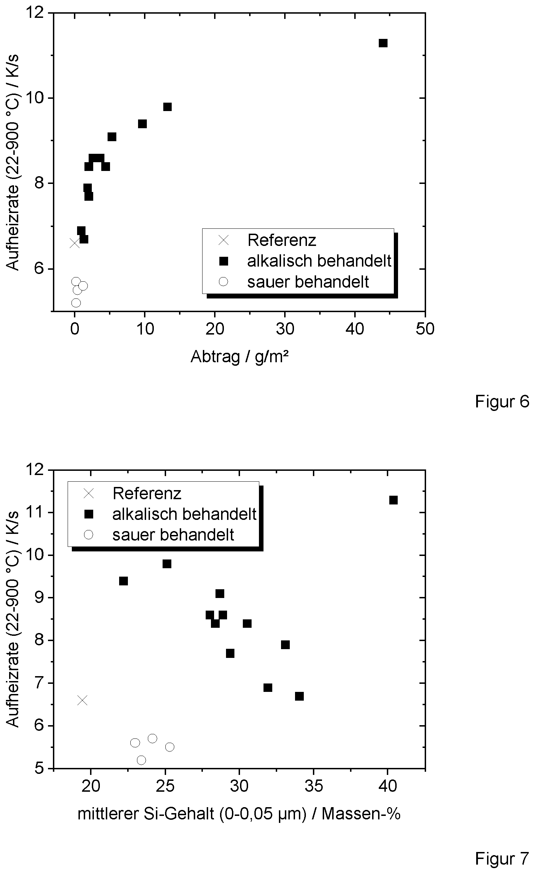

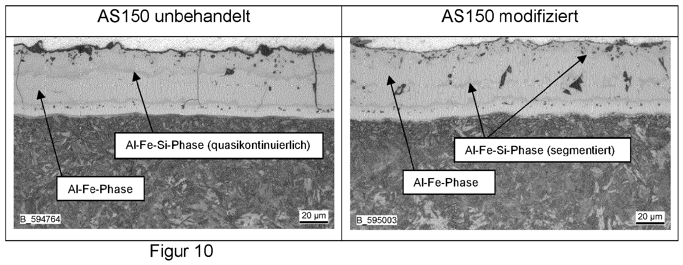

In Figur 9 und Figur 10 sind beispielhaft metallografische Schliffe von unbehandelten und erfindungsgemäß modifizierten 22MnB5+AS150 Platinen lichtmikroskopisch dargestellt, die bei 910 °C Ofentemperatur und 180 Sekunden Ofenzeit (Figur 7) bzw. 300 Sekunden Ofenzeit (Figur 8) erwärmt und im Anschluss pressgehärtet wurden. Nach 180 Sekunden Ofenzeit ist zu erkennen, dass im Gegensatz zur erfindungsgemäß modifizierten Platine der unbehandelte AlSi-Überzug noch nicht durchlegiert ist. Nach 300 Sekunden Ofenzeit ist zu erkennen, dass die Diffusionszone zwischen Überzug und Stahl beim erfindungsgemäß modifizierten 22MnB5+AS150 deutlich dicker ausgeprägt ist. Darüber hinaus haben sich als Folge der höheren Aufheizrate die intermetallischen Al-Fe-Si Phase nicht als überwiegend durchgehende (quasikontinuierliche), parallel zur Stahloberfläche verlaufende Schicht, sondern segmentiert ausgebildet.

**Patentansprüche**

1. Stahlflachprodukt für eine anschließende austenitisierende Glühbehandlung in einem Ofen mit einer Ofentemperatur im Bereich von 880 bis 950 °C, mit einer aluminiumbasierten Beschichtung, wobei die Beschichtung einen im Schmelztauchverfahren aufgebrachten, aluminiumbasierten Überzug mit 1,8 bis 15 Massenprozent Silizium, vorteilhaft mit 5 bis 13 Massenprozent Silizium, noch vorteilhafter mit 8 bis 11 Massenprozent Silizium umfasst, **dadurch gekennzeichnet, dass** der Überzug - zur Festlegung eines auf den genannten Bereich der Ofentemperatur während der austenitisierenden Glühbehandlung bezogenen Absorptionsgrades der Oberfläche der Beschichtung für Wärmestrahlung in einem Bereich von 0,35 bis 0,95, insbesondere von 0,40 bis 0,80, vorteilhaft von 0,45 bis 0,70 - ausgehend von der Oberfläche innerhalb der ersten 0,05 $\mu$m einen mittleren Siliziumgehalt zwischen 25 und 70 Massenprozent aufweist.

2. Stahlflachprodukt nach Anspruch 1, **dadurch gekennzeichnet, dass** der Eisenanteil im Überzug weniger als 5 Massenprozent, vorteilhaft weniger als 4 Massenprozent, beträgt.

3. Stahlflachprodukt nach mindestens einem der Ansprüche 1 oder 2, **dadurch gekennzeichnet, dass** der Überzug zusätzlich Beimischungen von Zn, Mg, Mn, Ti, Pb, Ni, Zr, Hf, Ce, La von maximal 30 Massenprozent umfasst.

4. Stahlflachprodukt nach mindestens einem der Ansprüche 1 bis 3, **dadurch gekennzeichnet, dass** der Überzug ausgehend von der Oberfläche innerhalb der ersten 0,05 $\mu$m einen mittleren Siliziumgehalt 30 und 60 Massenprozent, vorteilhaft zwischen 35 und 55 Massenprozent, aufweist.

5. Stahlflachprodukt nach mindestens einem der Ansprüche 1 bis 4, **dadurch gekennzeichnet, dass** auf dem Überzug eine Aluminiumoxid und/oder -hydroxid enthaltende Deckschicht mit einem Massenanteil von mindestens 50 %, vorteilhaft mindestens 70 %, angeordnet ist, welche durch eine elektrochemische Anodisierung, eine Plasmaoxidation, oder eine plasmaelektrolytische Oxidation hergestellt wurde.

6. Stahlflachprodukt nach Anspruch 5, **dadurch gekennzeichnet, dass** die mittlere Schichtdicke der Deckschicht kleiner als 1 $\mu$m und größer als 0,05 $\mu$m, insbesondere kleiner als 0,8 $\mu$m und größer als 0,1 $\mu$m, ist.

7. Verfahren zur Herstellung eines Stahlflachprodukts für eine anschließende austenitisierende Glühbehandlung in einem Ofen mit einer Ofentemperatur im Bereich von 880 bis 950 °C nach mindestens einem der Ansprüche 1 bis 6, mit einer aluminiumbasierten Beschichtung mit 1,8 bis 15 Massenprozent Silizium, vorteilhaft mit 5 bis 13 Massenprozent Silizium, noch vorteilhafter mit 8 bis 11 Massenprozent Silizium, wobei als Beschichtung der aluminiumbasierte Überzug im Schmelztauchverfahren auf das Stahlflachprodukt aufgebracht wird, wobei das Stahlflachprodukt mit dem Überzug nach dem Schmelztauchprozess einer abtragenden Oberflächenbehandlung unterzogen wird, bei der ausgehend von der Oberfläche der Beschichtung Aluminium aus der Beschichtung chemisch oder elektrochemisch zumindest teilweise entfernt wird, um den prozentualen Anteil von Silizium im Vergleich zu dem Anteil von Aluminium in der Oberfläche des Überzugs derart zu erhöhen, dass die Oberfläche der Beschichtung einen Absorptionsgrad für Wärmestrahlung aufweist, der 0,35 bis 0,95, insbesondere 0,40 bis 0,80, vorteilhaft 0,45 bis 0,70, beträgt, wobei der Absorptionsgrad auf den genannten Bereich der Ofentemperatur während der austenitisierenden Glühbehandlung bezogen ist, und wobei für die abtragende Oberflächenbehandlung ein wässriges Medium enthaltend Alkalimetallhydroxide oder Alkalicarbonate als Abtragsmittel verwendet wird.

8. Verfahren nach Anspruch 7, **dadurch gekennzeichnet, dass** durch die abtragende Oberflächenbehandlung in der Beschichtung ausgehend von der Oberfläche der Beschichtung innerhalb der ersten 0,05 $\mu$m ein mittlerer Siliziumgehalt zwischen 25 und 70 Massenprozent, insbesondere zwischen 30 und 60 Massenprozent, vorteilhaft zwischen 35 und 55 Massenprozent, eingestellt wird.

**9.** Verfahren nach Anspruch 7 oder 8, **dadurch gekennzeichnet, dass** das Abtragsmittel einen pH-Wert > 10, vorteilhaft > 11, besonders vorteilhaft > 12, besitzt.

**10.** Verfahren nach mindestens einem der Ansprüche 7 bis 9, **dadurch gekennzeichnet, dass** das Abtragsmittel Fluoride und/oder Tenside und/oder Netzmittel enthält.

**11.** Verfahren nach mindestens einem der Ansprüche 7 bis 10, **dadurch gekennzeichnet, dass** die abtragende, chemische Oberflächenbehandlung in einem Tauch- oder Spritzverfahren durchgeführt wird.

**12.** Verfahren nach mindestens einem der Ansprüche 7 bis 11, **dadurch gekennzeichnet, dass** die abtragende Oberflächenbehandlung im Anschluss an das Schmelztauchen in einem kontinuierlichen Prozess erfolgt.

**13.** Verfahren nach mindestens einem der Ansprüche 7 bis 12, **dadurch gekennzeichnet, dass** während der abtragenden Oberflächenbehandlung ein Massenverlust des Überzugs pro Blech- oder Bandseite des Stahlflachprodukts von 0,2 bis 20 g/m$^2$, insbesondere von 0,5 bis 10 g/m$^2$, vorteilhaft 1,0 bis 5 g/m$^2$, eingehalten wird.

**14.** Verfahren nach mindestens einem der Ansprüche 7 bis 13, **dadurch gekennzeichnet, dass** im Anschluss an die abtragende Oberflächenbehandlung eine elektrochemische Anodisierung, eine Plasmaoxidation, oder eine plasmaelektrolytische Oxidation der Oberfläche des Überzugs erfolgt, bei der eine oxidische Deckschicht erzeugt wird.

**15.** Verfahren nach Anspruch 14, **dadurch gekennzeichnet, dass** eine mittlere Schichtdicke der Deckschicht kleiner als 1 $\mu$m und größer als 0,05 $\mu$m, vorteilhaft kleiner als 0,8 $\mu$m und größer als 0,1 $\mu$m, erzeugt wird.

**16.** Verfahren zur Herstellung von pressgehärteten Bauteilen aus Stahlflachprodukten mit einer aluminiumbasierten Beschichtung hergestellt nach mindestens einem der Ansprüche 7 bis 15, **dadurch gekennzeichnet, dass** die Stahlflachprodukte zumindest abschnittweise auf eine Temperatur über Austenitisierungstemperatur Ac3 erhitzt werden, anschließend umgeformt und mit einer Geschwindigkeit abgekühlt werden, die zumindest abschnittsweise oberhalb der kritischen Abkühlgeschwindigkeit für eine Martensitbildung liegt.

**Claims**

**1.** Flat steel product for a subsequent austenitizing annealing treatment in a furnace at a furnace temperature in the range of 880 to 950°C, comprising an aluminum-based coating, the coating comprising an aluminum-based coat which is applied in a hot-dipping process and has 1.8 to 15 mass percent silicon, advantageously 5 to 13 mass percent silicon, even more advantageously 8 to 11 mass percent silicon, **characterized in that** the coat - for determining an absorption degree of the surface of the coating for thermal radiation, which is relative to the aforementioned range of the furnace temperature during the austenitizing annealing treatment, in a range of from 0.35 to 0.95, in particular from 0.40 to 0.80, advantageously from 0.45 to 0.70 - starting from the surface within the first 0.05 $\mu$m, has an average silicon content between 25 and 70 mass percent.

**2.** Flat steel product according to claim 1, **characterized in that** the iron content in the coat is less than 5 mass percent, advantageously less than 4 mass percent.

**3.** Flat steel product according to at least one of claims 1 or 2, **characterized in that** the coat additionally comprises admixtures of Zn, Mg, Mn, Ti, Pb, Ni, Zr, Hf, Ce, and La of at most 30 mass percent.

**4.** Flat steel product according to at least one of claims 1 to 3, **characterized in that** the coat has, starting from the surface within the first 0.05 $\mu$m, an average silicon content between 30 and 60 mass percent, advantageously between 35 and 55 mass percent.

**5.** Flat steel product according to at least one of claims 1 to 4, **characterized in that** a cover layer containing aluminum oxide and/or hydroxide is arranged on the coat and has a mass fraction of at least 50%, advantageously at least 70%, said cover layer having been produced by electrochemical anodization, plasma oxidation, or plasma-electrolytic oxidation.

**6.** Flat steel product according to claim 5, **characterized in that** the average layer thickness of the cover layer is less than 1 $\mu$m and greater than 0.05 $\mu$m, in particular less than 0.8 $\mu$m and greater than 0.1 $\mu$m.

**7.** Method for producing a flat steel product for a subsequent austenitizing annealing treatment in a furnace at a furnace temperature in the range of 880 to 950°C according to at least one of claims 1 to 6, comprising an aluminum-based coating having 1.8 to 15 mass percent silicon, advantageously having 5 to 13 mass percent silicon, even more advantageously having 8 to 11 mass percent silicon, wherein the aluminum-based coat is applied as coating to the flat steel product in the hot-dipping process, wherein the flat steel product having the coat is subjected to an abrasive surface treatment after the hot-dipping process, in which, starting from the surface of the coating, aluminum is at least partially removed chemically or electrochemically from the coating in order to increase the percentage share of silicon in comparison to the share of aluminum in the surface of the coat such that that the surface of the coating has an absorption degree for thermal radiation between 0.35 to 0.95, in particular 0.40 to 0.80, advantageously 0.45 to 0.70, wherein the absorption degree is related to the furnace temperature in the aforementioned range during the austenitizing annealing treatment, and wherein an aqueous medium containing alkali metal hydroxides or alkali carbonates is used as an abrasive for the abrasive surface treatment.

**8.** Method according to claim 7, **characterized in that** due to the abrasive surface treatment in the coating starting from the surface of the coating within the first 0.05 $\mu$m, an average silicon content is set between 25 and 70 percent by mass, in particular between 30 and 60 percent by mass, advantageously between 35 and 55 percent by mass.

**9.** Method according to either claim 7 or claim 8, **characterized in that** the abrasive has a pH value > 10, advantageously > 11, particularly advantageously > 12.

**10.** Method according to at least one of claims 7 to 9, **characterized in that** the abrasive contains fluorides and/or surfactants and/or wetting agents.

**11.** Method according to at least one of claims 7 to 10, **characterized in that** the abrasive, chemical surface treatment is carried out in a dipping or injection method.

**12.** Method according to at least one of claims 7 to 11, **characterized in that** the abrasive surface treatment takes place in a continuous process following the hot-dipping process.

**13.** Method according to at least one of claims 7 to 12, **characterized in that** during the abrasive surface treatment, a mass loss of the coat from 0.2 to 20 g/m$^2$, in particular from 0.5 to 10 g/m$^2$, advantageously 1.0 to 5 g/m$^2$, is maintained for each sheet metal side or strip side of the flat steel product.

**14.** Method according to at least one of claims 7 to 13, **characterized in that**, following the abrasive surface treatment, electrochemical anodization, plasma oxidation, or plasma-electrolytic oxidation of the surface of the coat takes place, in which an oxidic cover layer is produced.

**15.** Method according to claim 14, **characterized in that** an average layer thickness of the cover layer less than 1 $\mu$m and greater than 0.05 $\mu$m, advantageously less than 0.8 $\mu$m and greater than 0.1 $\mu$m is produced.

**16.** Method for producing press-cured components from flat steel products having an aluminum-based coating produced according to at least one of claims 7 to 15, **characterized in that** the flat steel products are heated at least in portions to a temperature above austenitizing temperature Ac3, and are subsequently formed and cooled at a rate which is at least partially above the critical cooling rate for martensite formation.

**Revendications**

**1.** Produit plat en acier destiné au traitement ultérieur de recuit d'austénitisation dans un four à une température de four comprise entre 880 et 950 °C, ledit produit comprenant un revêtement à base d'aluminium, le revêtement comprenant une pellicule à base d'aluminium appliquée dans un procédé d'immersion à chaud et comprenant 1,8 à 15 pour cent en masse de silicium, avantageusement 5 à 13 pour cent en masse de silicium, encore plus avantageusement 8 à 11 pour cent en masse de silicium, caractérisé en que, pour spécifier un niveau d'absorption du rayonnement thermique par la surface du revêtement dans une gamme de 0,35 à 0,95, en particulier de 0,40 à 0,80, avantageusement de 0,45 à 0,7, lequel niveau d'absorption est lié à la gamme mentionnée de température de four pendant le traitement de recuit d'austénitisation, la pellicule présente, dans les premiers 0,05 $\mu$m à partir de la surface, une teneur moyenne en silicium comprise entre 25 et 70 pour cent en masse.

**2.** Produit plat en acier selon la revendication 1, **caractérisé en ce que** le pourcentage de fer dans la pellicule est inférieur à 5 pour cent en masse, avantageusement inférieur à 4 pour cent en masse.

**3.** Produit plat en acier selon l'une au moins des revendications 1 ou 2, **caractérisé en ce que** la pellicule contient en outre des adjonctions de Zn, Mg, Mn, Ti, Pb, Ni, Zr, Hf, Ce, La de 30 pour cent en masse maximum.

**4.** Produit plat en acier selon l'une au moins des revendications 1 à 3, **caractérisé en ce que** la pellicule a, dans les premiers 0,05 $\mu$m à partir de la surface, une teneur moyenne en silicium de 30 et 60 pour cent en masse, avantageusement entre 35 et 55 pour cent en masse.

**5.** Produit plat en acier selon l'une au moins des revendications 1 à 4, **caractérisé en ce qu'**une couche de recouvrement contenant de l'oxyde et/ou de l'hydroxyde d'aluminium avec un pourcentage en masse d'au moins 50 %, avantageusement d'au moins 70 %, est disposée sur la pellicule, laquelle couche de recouvrement est obtenue par anodisation électrochimique, oxydation plasma ou oxydation électrolytique plasma.

**6.** Produit plat en acier selon la revendication 5, **caractérisé en ce que** l'épaisseur moyenne de la couche de recouvrement est inférieure à 1 $\mu$m et supérieure à 0,05 $\mu$m, en particulier inférieure à 0,8 $\mu$m et supérieure à 0,1 $\mu$m.

**7.** Procédé de fabrication d'un produit plat en acier pour un traitement ultérieur de recuit d'austénitisation dans un four à une température de four comprise entre 880 et 950 °C selon l'une au moins des revendications 1 à 6, ledit produit comprenant une revêtement à base d'aluminium comprenant 1,8 à 15 pour cent en masse de silicium, avantageusement 5 à 13 pour cent en masse de silicium, encore plus avantageusement 8 à 11 pour cent en masse de silicium, la pellicule à base d'aluminium étant appliquée comme revêtement sur le produit plat en acier par un procédé par immersion à chaud, le produit plat en acier pourvu de la pellicule étant soumis après le processus d'immersion à chaud à un traitement de surface d'élimination dans lequel, à partir de la surface du revêtement, l'aluminium est au moins partiellement éliminé du revêtement par voie chimique ou électrochimique afin d'augmenter le pourcentage de silicium par rapport au pourcentage d'aluminium dans la surface de la pellicule de manière à ce que la surface du revêtement présente un niveau d'absorption du rayonnement thermique qui est de 0,35 à 0,95, en particulier de 0,40 à 0,80, avantageusement de 0,45 à 0,70, le niveau d'absorption étant basé sur la gamme mentionnée de température du four pendant le traitement de recuit d'austénitisation, et un milieu aqueux contenant des hydroxydes de métaux alcalins ou des carbonates alcalins étant utilisé comme agent d'élimination pour le traitement de surface d'élimination.

**8.** Procédé selon la revendication 7, **caractérisé en ce qu'**une teneur moyenne en silicium comprise entre 25 et 70 pour cent en masse, notamment entre 30 et 60 pour cent en masse, avantageusement entre 35 et 55 pour cent en masse est réglée par le traitement de surface d'élimination dans le revêtement, dans les premiers 0,05 $\mu$m à partir de la surface du revêtement.

**9.** Procédé selon la revendication 7 ou 8, **caractérisé en ce que** l'agent d'élimination a une valeur de pH > 10, avantageusement > 11, de manière particulièrement avantageuse > 12.

**10.** Procédé selon l'une au moins des revendications 7 à 9, **caractérisé en ce que** l'agent d'élimination contient des fluorures et/ou des tensioactifs et/ou des agents mouillants.

**11.** Procédé selon l'une au moins des revendications 7 à 10, **caractérisé en ce que** le traitement de surface chimique d'élimination est effectué dans un procédé d'immersion ou de pulvérisation.

**12.** Procédé selon l'une au moins des revendications 7 à 11, **caractérisé en ce que** le traitement de surface d'élimination est effectué après l'immersion à chaud dans un processus continu.

**13.** Procédé selon l'une au moins des revendications 7 à 12, **caractérisé en ce que**, pendant le traitement de surface d'élimination, une perte de masse de la pellicule par face de tôle ou de bande du produit plat en acier est maintenue de 0,2 à 20 g/m$^2$, notamment de 0,5 à 10 g/m$^2$, avantageusement de 1,0 à 5 g/m$^2$.

**14.** Procédé selon l'une au moins des revendications 7 à 13, **caractérisé en ce qu'**une anodisation électrochimique, une oxydation plasma, ou une oxydation électrolytique plasma de la surface de la pellicule, dans laquelle une couche de recouvrement oxydante est obtenue, est effectuée après le traitement de surface d'élimination.

**15.** Procédé selon la revendication 14, **caractérisé en ce qu'**une épaisseur moyenne de la couche de recouvrement est inférieure à 1 μm et supérieure à 0,05 μm, avantageusement inférieure à 0,8 μm et supérieure à 0,1 μm.

**16.** Procédé de fabrication de pièces durcies sous pression à partir de produits plats en acier pourvus d'un revêtement à base d'aluminium réalisés selon l'une au moins des revendications 7 à 15, **caractérisé en ce que** les produits plats en acier sont chauffés au moins par portions à une température supérieure à la température d'austénitisation Ac3, puis mis en forme et refroidis à une vitesse qui est au moins par portions supérieure à la vitesse de refroidissement critique pour la formation de martensite.

AlSi-Überzug mit Fe< 5 Massenprozent

intermetallische Fe-Al-Si-Phase

Figur 1

Figur 2

Figur 3

Figur 4

Figur 5

Figur 6

Figur 7

Figur 8

| AS150 unbehandelt | AS150 modifiziert |
|---|---|

nicht vollständig durchlegierter Überzug

Diffusionszone

B_594754    20 µm

B_594905    20 µm

Figur 9

Figur 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2449138 B1
- EP 2828414 B1
- DE 60119826 T2
- DE 69933751 T2
- WO 2018153755 A1
- DE 102004007071 B4
- WO 2009095427 A1
- DE 69706387 T2
- DE 102016102504 A1